# EUROPEAN PATENT APPLICATION

(11) **EP 4 391 128 A1**
(43) Date of publication of application: **26.06.2024**
(21) Application number: 22216029.3
(22) Date of filing: 22.12.2022
(51) Int. Cl.: H01M 10/04, B32B 17/02, B32B 18/00, B32B 19/00, B32B 19/04, B32B 25/00, B32B 27/00, H01M 50/293

(54) **MULTILAYER PROTECTIVE ELEMENT FOR A BATTERY ASSEMBLY COMPRISING AT LEAST TWO BATTERY CELLS**

(71) Applicant: Henkel AG & Co. KGaA, 40589 Düsseldorf (DE)
(72) Inventor: Lee, Keon, 40489 Düsseldorf (DE); Knecht, Tobias, 48155 Münster (DE); Calixto, Roger, 50737 Köln (DE); Otte, Stefan, 37075 Göttingen (DE); Almstedt, Nina, 40221 Düsseldorf (DE)
(74) Representative: Wagner Albiger & Partner Patentanwälte mbB

(57) **Abstract**

The invention relates to a multilayer protective element (1) for a battery assembly (100) comprising at least two battery cells (10), wherein the protective element (1) can be arranged between the battery cells (10) and wherein the protective element (1) comprises at least two layers, wherein a first layer is formed as an elastic buffer layer (2) and comprises a foamed polymeric material and/or a woven polymeric material and/or an unwoven polymeric material and a second layer is formed as a heat insulating barrier layer (3) and comprises a ceramic material. The invention further relates to a battery assembly (100) comprising such a multilayer protective element (1), and to the use of a multilayer protective element (1) in a battery assembly (100).

## Description

The invention relates to a multilayer protective element for a battery assembly comprising at least two battery cells. The invention further relates to a battery assembly comprising such a multilayer protective element and to the use of a multilayer protective element in a battery assembly.

Nowadays, high-voltage batteries are used in numerous applications, especially in connection with electromobility. For this purpose, individual battery cells are assembled to form larger battery arrays. The individual battery cells, which are usually in the form of prismatic or pouch-shaped battery cells with two flat outer surfaces facing each other in parallel, are arranged close together in an outer housing and connected in series and/or in parallel. Depending on the number of battery cells used, battery assemblies with an energy capacity of between 5 and 200 kWh and an operating voltage of between 12 and 800 V can be provided in this way.

During operation, the battery cells can be subject to various reversible and non-reversible processes, which are already countered by various measures in the state of the art.

Thus, battery cells expand to a certain extent during each charging process, and contract again during the subsequent discharging process. This process is also known as "breathing" of the battery cell. In orderto compensate for the associated dimensional changes, balancing elements are already used today, which are arranged between the individual battery cells. Such a balancing system is known, for example, from US 10,840,494 B2. Additionally, over time, the breathing effects can be accumulated, leading to permanent expansion of the cell.

In addition to breathing, which all battery cells are subject to, thermal runaway can occur in individual battery cells under extreme conditions during operation. This is an uncontrolled reaction within a battery cell that can be accompanied by extreme heat and pressure development. The heat can quickly transfer to neighboring battery cells and start a chain reaction, releasing energy explosively and causing the battery assembly to catch fire. For this reason, it is already known, for example from EP 3 661 744 B1 and WO 2008/136875 A1, to provide barriers made of fire protection materials between the individual battery cells to prevent thermal runaway from spreading to neighboring battery cells. However, such barriers made of fire protection materials are not sufficiently capable of reacting to the dimensional changes of the battery cells described above.

The object underlying the present invention is to provide a multilayer protective element for a battery assembly which can both compensate for dimensional changes in the individual battery cells in the course of charging and discharging cycles and at the same time provide very good protection against the propagation of heat in the course of thermal runaway of a battery cell. It is a further object of the invention to provide a battery assembly with such a protective element.

These objects are accomplished by a protective element with the features of patent claim 1 as well as by a battery assembly with a protective element according to patent claim 10 and a use of a protective element according to patent claim 11.

Advantageous embodiments and further developments of the invention are the subject of the dependent claims.

According to claim 1, the invention is a multilayer protective element for a battery assembly comprising at least two battery cells, wherein the protective element can be arranged between the battery cells. The invention is characterized in that the protective element comprises at least two layers, wherein a first layer is formed as an elastic buffer layer and comprises a foamed polymeric material and/or a woven polymeric material and/or an unwoven polymeric material and a second layer is formed as a heat insulating barrier layer and comprises a ceramic material.

In other words, due to its layered structure and the special materials used, the protective element according to the invention combines elastic as well as insulating and fire-retardant properties in one component and is therefore designed as a multifunctional protective element. The elastic buffer layer, which comprises a foamed polymeric material and/or a woven polymeric material and/or an unwoven polymeric material, is capable of being compressed when the battery cells expand. The restoring forces occurring in the elastic material as a result of this compression cause the polymeric material to move back to its original state when the battery cells contract. In this way, dimensional changes of the battery cells can be dynamically compensated. The heat insulating barrier layer comprises a ceramic material that has low thermal conductivity and good fire retardant properties. In this way, heat transfer from one battery cell to an adjacent battery cell can be substantially prevented.

The compressible properties of the protective element can also be utilized already during the assembly of a battery assembly comprising a plurality of individual battery cells. For example, when assembling a battery assembly, a stack of battery cells is fitted into an outer housing; the arrangement of a compressible protective element according to the invention between at least some of the battery cells allows the stack of battery cells to be somewhat compressed and thus optimally fitted into the outer housing.

In a simplest embodiment, the protective element comprises a buffer layer and a barrier layer. In principle, however, the protective element can also comprise several buffer layers and/or several barrier layers and/or other layers of a different design.

According to one embodiment of the invention, the polymeric material of the buffer layer is selected from a group comprising polyethylene, polypropylene, polyurethane, silicone, polyamide, polyvinylidene fluoride, natural rubber, synthetic rubber, acrylate, polyacrylonitrile, partially and fully oxidized polyacrylonitrile, keratin and combinations of materials comprising one or more of these materials. These materials have good elastic properties in the foamed or woven or unwoven state, i.e. they are compressible under the action of force and return to their initial state when the force is released.

Preferably, the compression force of the buffer layer at 25% compression of this layer is about 5 to 300 kPa, more preferably 5 to 200 kPa, and the compression set is preferably less than 10%, more preferably less than 5%, based on standard specification ASTM D1056 at a temperature of about 100°C.

According to another embodiment of the invention, the ceramic material of the barrier layer is selected from a group of materials comprising silicate, silica, metal oxide, metal carbonate, mica, rock powder, glass fiber, carbon fiber and combinations of materials comprising one or more of these materials. It can be designed as a pad or a composite of ceramic material.

The barrier layer preferably has a fire-retardancy of level V1 based on the UL94 regulation, and a fire-retardancy of level V0 is particularly preferred. The barrier layer also has heat insulating properties with a thermal conductivity of preferably less than 0.5 W/mK, particularly preferably less than 0.3 W/mK in a direction perpendicular to the surface area facing a battery cell.

According to one proposal of the invention, the buffer layer has a thickness of 0.1 to 10 mm. Preferably, the thickness of the buffer layer can be in a range between 0.2 and 5 mm.

According to a further suggestion of the invention, the barrier layer has a thickness of 0.1 to 10 mm. Preferably, the thickness of the barrier layer can be in a range between 0.3 and 5 mm.

The total thickness of the protective element is preferably 0.2 to 20 mm, more preferably 0.5 to 10 mm. The area of the protective element is preferably 30% to 100%, more preferably 60% to 95% of the area of a flat outer surface of a battery cell.

The barrier layer is preferably more rigid than the buffer layer so that it is not compressed or less compressed in the course of the dimensional changes of the battery cells. For example, it can have a compression force of at least 150% of that of a buffer layer at the same deflection. For example, if the buffer layer shows 0,1 MPa of compression force at 0,1 mm deformation, the barrier layer should have a value of at least 0,15 MPa at the same deformation. If the value of the barrier layer is too low, it can be deformed permanently, which may lead to loss of its original purpose to block the heat transfer.

Furthermore, the barrier layer is preferably designed in such a way that it does not melt for more than two minutes even if exposed to high temperatures of at least 600°C, particularly preferably at least 1000°C. In this way, it acts as a barrier to other battery cells in the event of thermal runaway of a battery cell.

The dielectric strength of the barrier layer and/or the buffer layer can have a value of more than 2.5 kV/mm. Preferably, this value can be higher than 3.5 kV/mm.

The buffer layer and barrier layer can be assembled into the protective element of the invention by various processes, such as lamination, dispensing, spraying, flat streaming, slot coating and roll-to-roll.

According to the invention, it can be provided that a layer of an adhesive material is arranged between the buffer layer and the barrier layer. The adhesive material may comprise, for example, pressure sensitive adhesive or hotmelt.

The outer surfaces of the protective element may in principle be formed by a buffer layer and/or a barrier layer. According to an alternative embodiment of the invention, at least one outer surface of the protective element comprises a film based on polyethylene terephthalate, polyethylene, polypropylene, polyolefine, nylon, polyamideimide, polyamide or polyimide. It may be provided that the film is bonded to the buffer layer and/or the barrier layer by an adhesive material.

In a further embodiment of the invention, the barrier layer may comprise hollow particles, for example in the form of hollow silica and/or an aerogel, for improved thermal insulation.

According to claim 10, the invention further relates to a battery assembly having at least two battery cells between which a multilayer protective element according to one of claims 1 to 9 is arranged. In the case of a battery assembly having a plurality of battery cells, it may in principle be provided that a protective element according to the invention is arranged between every two adjacent battery cells. Alternatively, it may be provided that such a protective element is provided only between some of the battery cells.

In addition, according to claim 11, the use of a multilayer protective element according to any one of claims 1 to 9 is proposed for interposing between two battery cells in a battery assembly.

In the following, the invention is explained in more detail by means of embodiment examples and with reference to the accompanying drawings, in which:
- Figure 1:: shows a schematic sectional view of an embodiment of a protective element according to the invention;
- Figure 2:: shows an alternative embodiment of a protective element according to the invention in schematic sectional view;
- Figure 3:: shows a battery assembly with a protective element according to the invention.

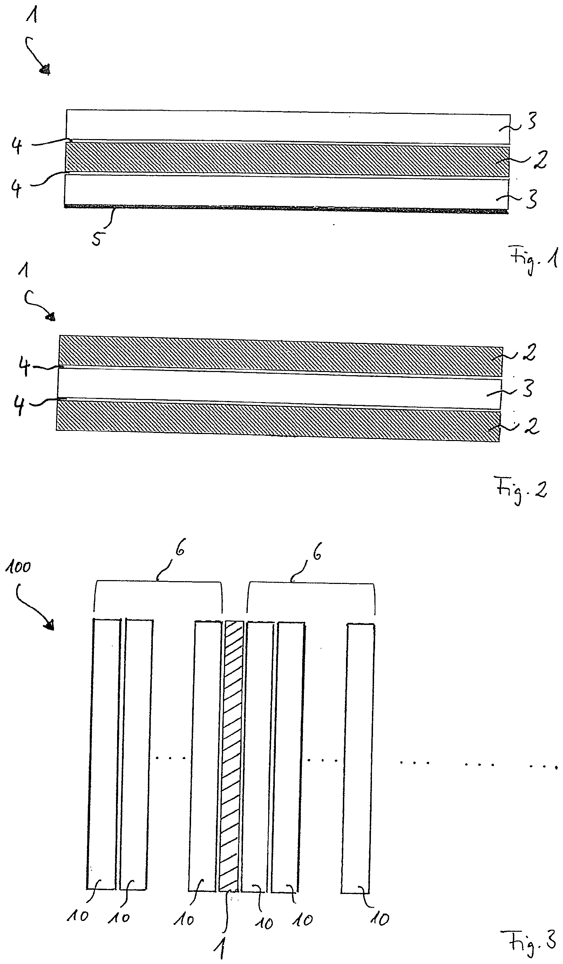

Figure 1 shows a multilayer protective element according to the invention, designated in its entirety as 1. The protective element 1 comprises a central elastic buffer layer 2, which is made of foamed polyurethane. A heat insulating barrier layer 3 comprising a ceramic material, in this case mica, is disposed on each side of the buffer layer 2. The buffer layer 2 is bonded to each of the two barrier layers 3 via a thin layer 4 of an adhesive material. In this case, the adhesive material is a pressure sensitive adhesive.

An outer surface of the protective element 1 is formed by a film 5 based on polyethylene terephthalate, which serves to protect the underlying barrier layer 2. Also, the film 5 and the underlying barrier layer 2 are bonded together by a layer of an adhesive material not shown in the figure.

Both the buffer layer 2 and the barrier layers 3 each have a thickness of about 2 mm. The entire protective element 1, including the adhesive layers 4, has a thickness of about 7 mm.

The protective element 1 thus combines in one component a buffer layer 2, which is elastic and thus reversibly compressible, and two barrier layers 3, which have fire-retardant and heat insulating properties due to their material. This makes the protective element 1 eminently suitable for interposing between battery cells 10 in a battery assembly 100, as shown in Figure 3.

Figure 3 shows a battery assembly designated 100 in its entirety, in which stacks 6 of prismatic battery cells 10 are arranged next to each other. Each stack 6 comprises several, for example eight, battery cells 10, of which, however, only 3 are shown in Figure 3. As schematically indicated in Figure 3, the battery assembly 100 comprises a plurality, for example 10, of such stacks 6 of battery cells 6. A multilayer protective element 1 having the above-described properties is arranged between each two stacks 6. In principle, it is possible to provide such a protective element 1 between every two adjacent battery cells 10; however, this is accompanied by increased cost and space requirements. In this respect, it is a good compromise to provide protective elements 1 between the stacks 6.

Figure 2 shows a further embodiment of a multilayer protective element designated in its entirety as 1. The protective element 1 has a central barrier layer 3 comprising a ceramic material, in this case glass fiber. For even better heat insulation, the barrier layer 3 further comprises aerogel particles. A buffer layer 2 made of partially oxidized unwoven polyacrylonitrile fiber is arranged on each side of the central barrier layer 3. The barrier layer 3 and the buffer layers 2 are bonded together by adhesive layers 4.

The two buffer layers 2 each form an outer surface of the protective element 1. Unlike the embodiment example of Figure 1, no additional film is provided on the outer surface here.

The total thickness of the protective element 1 is about 8 mm, with each of the buffer layers 2 having a thickness of about 2,5 mm and the barrier layer 3 having a thickness of about 3 mm.

### List of reference signs

- 1: protective element
- 2: buffer layer
- 3: barrier layer
- 4: layer
- 5: film
- 6: stack

- 10: battery cell

- 100: battery assembly

## Claims

1. A multilayer protective element (1) for a battery assembly (100) comprising at least two battery cells (10), wherein the protective element (1) can be arranged between the battery cells (10), **characterized in that** the protective element (1) comprises at least two layers, wherein a first layer is formed as an elastic buffer layer (2) and comprises a foamed polymeric material and/or a woven polymeric material and/or an unwoven polymeric material and a second layer is formed as a heat insulating barrier layer (3) and comprises a ceramic material.

2. Multilayer protective element (1) according to claim 1, **characterized in that** the polymeric material is selected from a group comprising polyethylene, polypropylene, polyurethane, silicone, polyamide, polyvinylidene fluoride, natural rubber, synthetic rubber, acrylate, polyacrylonitrile, partially and fully oxidized polyacrylonitrile, keratin and combinations of materials comprising one or more of these materials.

3. A multilayer protective element (1) according to claim 1 or 2, **characterized in that** the ceramic material is selected from a group of materials comprising silicate, silica, metal oxide, metal carbonate, mica, rock powder, glass fiber, carbon fiber and combinations of materials comprising one or more of these materials.

4. Multilayer protective element (1) according to one of claims 1 to 3, **characterized in that** the buffer layer (2) has a thickness of 0.1 to 10 mm.

5. Multilayer protective element (1) according to one of claims 1 to 4, **characterized in that** the barrier layer (3) has a thickness of 0.1 to 10 mm.

6. Multilayer protective element (1) according to one of claims 1 to 5, **characterized in that** a layer (4) of an adhesive material is arranged between the buffer layer (2) and the barrier layer (3).

7. Multilayer protective element (1) according to any one of claims 1 to 6, **characterized in that** at least one outer surface of the protective element (1) comprises a film (5) based on polyethylene terephthalate, polyethylene, polypropylene, polyolefine, nylon, polyamideimide, polyamide or polyimide.

8. Multilayer protective element (1) according to claim 7, **characterized in that** the film (5) is bonded to the buffer layer (2) and/or the barrier layer (3) by an adhesive material.

9. Multilayer protective element (1) according to any one of claims 1 to 8, **characterized in that** the barrier layer (3) comprises hollow silica and/or an aerogel.

10. A battery assembly (100) comprising at least two battery cells (10) between which a multilayer protective element (1) according to any one of claims 1 to 9 is arranged.

11. Use of a multilayer protective element (1) according to any one of claims 1 to 9 for interposing between two battery cells (10) in a battery assembly (100).
